# EUROPEAN PATENT APPLICATION

(11) **EP 4 759 891 A1**
(43) Date of publication of application: **17.06.2026**
(21) Application number: 24851986.0
(22) Date of filing: 07.02.2024
(51) Int. Cl.: C09J 7/26, C09J 7/25, C09J 7/38, C09J 7/40, C09J 11/06, C09J 133/00, C08L 75/04, C08K 5/07, C08K 5/101, C08K 5/3432

(54) **AIR-PERMEABLE WATERPROOF TAPE AND MANUFACTURING METHOD THEREFOR**

(30) Priority: 09.08.2023 KR 20230104392
(71) Applicant: Youngwoo Co., Ltd., Gyeonggi-do 18541 (KR)
(72) Inventor: LEE, Chan Ho, Gunpo-si Gyeonggi-do 15856 (KR); JUNG, Ha Lim, Suwon-si Gyeonggi-do 16576 (KR); NAM, Seung Woong, Seoul 03959 (KR); KIM, Tae Ho, Suwon-si Gyeonggi-do 16317 (KR)
(74) Representative: Stöckeler, Ferdinand
(86) International application number: PCT/KR2024/001842
(87) International publication number: WO 2025/033627

(57) **Abstract**

The disclosure relates to an air-permeable waterproof tape, which is excellent in terms of air permeability and waterproofness, adhesion to the skin, ultraviolet blocking, and skin care effects, by comprising: a first release film layer; a PSA adhesive layer formed on the upper surface of the first release film layer; an air-permeable polyurethane film layer formed on the upper surface of the PSA adhesive layer; and a second release film layer formed on the upper surface of the polyurethane air-permeable film layer.

## Description

### Technical Field

The present disclosure relates to an air-permeable waterproof tape and a manufacturing method therefor.

### Background Art

In recent years, outdoor temperatures have increased and ultraviolet (UV) radiation levels have risen as a consequence of rapid industrialization. Under these circumstances, demand has emerged for air-permeable and waterproof tapes for skin protection.

Korean Patent Application Publication No. 2022-0164731 discloses a polymer composition for waterproof-breathable films. However, the disclosure is limited to the formulation of the breathable film itself, and does not consider a configuration for providing additional skin-related benefits, such as wrinkle improvement, skin whitening, antimicrobial activity, or skin regeneration, that is, a separate skin-attachable adhesive layer.

Furthermore, Korean Patent No. 2263631 relates to a medical adhesive sheet excellent in waterproof and breathable properties. The disclosed medical adhesive sheet is a laminated structure in which a protective member, a membrane member, and an absorbent member are bonded using an adhesive layer formed in a mesh-like configuration. Nevertheless, this document does not consider any configuration for providing UV-blocking effects.

Accordingly, the present inventors have developed an air-permeable waterproof tape that exhibits high air permeability and waterproofness, strong adhesion to the skin, effective UV-blocking performance, and enhanced skin care effects.

### Disclosure

### Technical Problem

An objective of the present disclosure is to provide an air-permeable waterproof tape that is excellent in terms of air permeability, waterproofness, adhesion to the skin, UV-blocking performance, and skin care effects.

The objectives of the present disclosure are not limited to those mentioned above, and other objectives not explicitly mentioned herein will be clearly understood by those skilled in the art from the following description.

### Technical Solution

According to an embodiment of the present disclosure, there is provided an air-permeable waterproof tape, including: a first release film layer; a PSA adhesive layer formed on an upper surface of the first release film layer; an polyurethane air-permeable film layer formed on an upper surface of the PSA adhesive layer; and a second release film layer formed on an upper surface of the polyurethane air-permeable film layer, in which the polyurethane air-permeable film layer includes avobenzone and homosalate, and the PSA adhesive layer includes a non-acidic acrylic copolymer, niacinamide, and adenosine.

### Advantageous Effects

An air-permeable waterproof tape according to an embodiment of the present disclosure is excellent in terms of air permeability, waterproofness, adhesion to the skin, UV-blocking performance, and skin care effects.

The effects of the present disclosure are not limited to those mentioned above, and other effects not explicitly mentioned herein will be clearly understood by those skilled in the art from the specification and the accompanying drawings.

### Description of Drawings

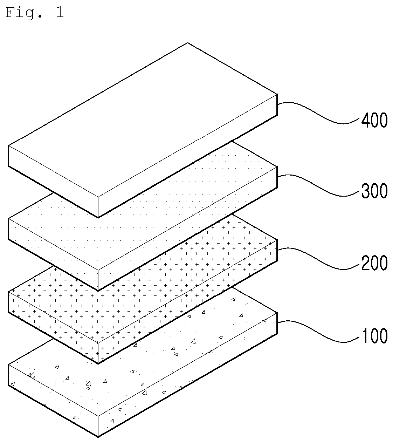

FIG. 1 illustrates an air-permeable waterproof tape according to an embodiment of the present disclosure.

### Best Mode

An air-permeable waterproof tape according to an embodiment of the present disclosure includes: a first release film layer; a PSA adhesive layer formed on an upper surface of the first release film layer; an polyurethane air-permeable film layer formed on an upper surface of the PSA adhesive layer; and a second release film layer formed on an upper surface of the polyurethane air-permeable film layer. The polyurethane air-permeable film layer includes avobenzone and homosalate, and the PSA adhesive layer includes a non-acidic acrylic copolymer, an isocyanate curing agent, niacinamide, and adenosine.

### Mode for Invention

Hereinafter, the configuration and operation effects of exemplary embodiments of the present disclosure will be described with reference to the accompanying drawings. For reference, in the following drawings, each component may be omitted or schematically illustrated for convenience and clarity, and the size of each component does not necessarily reflect its actual dimension. Throughout the specification, the same reference numerals will refer to the same or like components. In each drawing, overlapping descriptions of the same components may be omitted.

Referring to FIG. 1, a waterproof tape according to an embodiment of the present disclosure includes: a first release film layer 100; a PSA adhesive layer 200 formed on an upper surface of the first release film layer; an polyurethane air-permeable film layer 300 formed on an upper surface of the PSA adhesive layer; and a second release film layer 400 formed on an upper surface of the polyurethane air-permeable film layer.

### First release film layer 100

The first release film layer 100 has good thickness uniformity and excellent applicability under various processing conditions, and serves as a temporary support and protective layer for the adhesive layer during processing. Additionally, when the tape is applied to the skin, the first release film layer may be readily peeled off from the application site, thereby improving handling and application efficiency. Materials commonly used in the industry, such as polyethylene terephthalate (PET), polyolefin, polyethylene, polypropylene, glassine paper, and kraft paper, may be employed without particular limitation. Of these, polyethylene terephthalate (PET) is more preferable due to its adequate mechanical properties.

The first release film layer 100 may have a thickness in the range of 10 to 200 µm. When the thickness is less than 10 µm, cracks may frequently occur during peeling of the release layer, whereas the thickness exceeding 200 µm may result in an excessively thick waterproof tape, which is undesirable.

### PSA adhesive layer 200

The PSA adhesive layer 200 is formed on an upper surface of the first release film layer and a lower surface of the polyurethane air-permeable film layer 300, and contains components suitable for direct skin attachment. For stable skin adhesion, the PSA adhesive layer 200a preferably uses a non-acidic acrylic copolymer.

The PSA adhesive layer 200 may further include functional ingredients. Specifically, the PSA adhesive layer may include 0.001 to 10 parts by weight of niacinamide, 0.001 to 10 parts by weight of adenosine, and 0.1 parts by weight of xylene diisocyanate (XDI) as a curing agent, based on 100 parts by weight of the non-acidic acrylic copolymer. Niacinamide is incorporated as a functional ingredient for skin improvement. When the content of niacinamide is less than 0.001 parts by weight, the whitening effect may be negligible, whereas the content exceeding 10 parts by weight may cause skin irritation. Adenosine is incorporated as a functional ingredient for wrinkle improvement. When the content of adenosine is less than 0.001 parts by weight, the wrinkle-reducing effect may be negligible, whereas the content exceeding 10 parts by weight may increase the risk of skin irritation. The curing agent plays an essential role in maintaining the shape and mechanical stability of the PSA adhesive layer by promoting crosslinking. The curing agent may be replaced with other isocyanate-based curing agents, including H6-XDI (1,3-bis(isocyanatomethyl)cyclohexane), IPDI (isophorone diisocyanate), TDI (toluene diisocyanate), MDI (4,4'-methylenebis(phenyl isocyanate), H12MDI (4,4'-methylenebis(cyclohexyl isocyanate)), and HMDI (4,4'-methylenebis(cyclohexyl isocyanate). The content of the curing agent may be adjusted according to the desired adhesive and mechanical properties.

The PSA adhesive layer 200 may have a thickness in the range of 3 to 50 µm. When the thickness is less than 3 µm, adhesive strength may be excessively reduced, whereas the thickness exceeding 50 µm may adversely affect economic efficiency.

### Polyurethane air-permeable film layer 300

The polyurethane air-permeable film layer 300 is formed on an upper surface of the PSA adhesive layer 200 and a lower surface of the second release film layer 400. Due to insufficient interfacial bonding between a polyurethane matrix and insoluble microparticles contained therein, microvoids are formed within the film, resulting in enhanced air permeability. With this microporous structure, air permeability is maintained, whereas the permeability to liquid water is significantly suppressed, thereby imparting waterproof characteristics to the tape.

The polyurethane air-permeable film layer 300 may further include avobenzone and homosalate as ultraviolet (UV) blocking agents. Specifically, the polyurethane air-permeable film layer 300 may include 5 to 30 parts by weight of avobenzone and 5 to 30 parts by weight of homosalate, based on 100 parts by weight of polyurethane. When the content of avobenzone is less than 5 parts by weight, UV-blocking performance may be reduced, whereas the content exceeding 30 parts by weight provides only marginal improvement in UV-blocking efficiency relative to the increased content. Additionally, when the content of homosalate is less than 5 parts by weight, UV-blocking performance may be reduced, whereas the content exceeding 30 parts by weight provides only marginal improvement in UV-blocking efficiency relative to the increased content.

The polyurethane air-permeable film layer 300 may have a thickness in the range of 3 to 50 µm. When the thickness is less than 3 µm, UV-blocking performance may be excessively reduced, whereas the thickness exceeding 50 µm may lead to deterioration of air permeability.

### Second release film layer 400

The second release film layer 400 is formed on an upper surface of the polyurethane air-permeable film layer 300. The second release film layer 400 has good thickness uniformity and excellent applicability under various processing conditions, and serves as a temporary support and protective layer for the polyurethane air-permeable film layer during processing. Additionally, when the tape is applied to the skin, the second release film layer may be readily peeled off from the application site, thereby improving handling and application efficiency. Materials commonly used in the industry, such as polyethylene terephthalate (PET), polyolefin, polyethylene, polypropylene, glassine paper, and kraft paper, may be employed without particular limitation. Of these, polyolefin is more preferable because it provides a soft tactile feel due to its relatively low hardness while maintaining adequate mechanical properties.

The present disclosure may be more clearly understood through the following examples. These examples are provided solely for illustrative purposes and are not intended to limit the scope of the present disclosure.

### Example 1

A first film layer was prepared by forming a PSA adhesive layer with a thickness of 5 µm on an upper surface of a first release film layer composed of polyethylene terephthalate (PET) with a thickness of 100 µm. The PSA adhesive layer was formulated using 100 parts by weight of a non-acidic acrylic copolymer, 2 parts by weight of niacinamide, 0.04 parts by weight of adenosine, and 0.1 parts by weight of xylene diisocyanate (XDI) as a curing agent.

Separately, a second film layer was prepared by forming a polyurethane air-permeable film layer with a thickness of 10 µm on a lower surface of a second release film layer composed of polyolefin (PO) with a thickness of 50 µm. The polyurethane air-permeable film layer was formulated using 100 parts by weight of a polyurethane resin, 9 parts by weight of avobenzone, and 20 parts by weight of homosalate.

An air-permeable waterproof tape was obtained by laminating the second film layer onto an upper surface of the first film layer.

### Example 2

An air-permeable waterproof tape was manufactured in the same manner as in Example 1, except that the contents of avobenzone and homosalate were adjusted to 30 parts by weight and 30 parts by weight, respectively.

### Example 3

An air-permeable waterproof tape was manufactured in the same manner as in Example 1, except that the thickness of the air-permeable film layer was adjusted to 50 µm.

### Comparative Example 1

### Comparative Example 1

An air-permeable waterproof tape was manufactured in the same manner as in Example 1, except that the contents of avobenzone and homosalate were adjusted to 1 part by weight and 1 part by weight, respectively.

### Comparative Example 2

An air-permeable waterproof tape was manufactured in the same manner as in Example 1, except that the contents of avobenzone and homosalate were adjusted to 1 part by weight and 20 parts by weight, respectively.

### Comparative Example 3

An air-permeable waterproof tape was manufactured in the same manner as in Example 1, except that the thickness of the air-permeable film layer was adjusted to 70 µm.

### Comparative Example 4

An air-permeable waterproof tape was manufactured in the same manner as in Example 1, except that the thickness of the air-permeable film layer was adjusted to 1 µm.

### Experimental Example

### Experimental Example 1. Evaluation of UV-Blocking Efficiency

Measurement was made using a Labsphere Ultraviolet Transmittance Analyzer UV-2000F, in accordance with the ASTM D6603 test method.

### Experimental Example 2. Evaluation of Waterproofness

Samples were conditioned for 16 h at a relative humidity of (60±15)% and a temperature of (21±2)°C, after which testing was conducted under the same environmental conditions. Each sample and a standard cellulose-based filter paper were cut to match the dimensions of a test jig. The jig was then completely filled with distilled water maintained at (21±2)°C. The sample was mounted onto the jig such that an adhesive surface (skin-contact) thereof faced the distilled water inside the jig. Care was taken to ensure that no air is trapped between the jig and the sample. Subsequently, the filter paper and a ring were sequentially placed on top of the sample and the assembly was firmly clamped to prevent leakage of water from the jig and to restrict movement of the sample during testing. Distilled water initially stored at an inlet of the jig was introduced through a tube connected to the jig until the water reached and made contact with the sample mounted at the top of the jig. This state was maintained for (300±10) s. The filter paper was then visually inspected to determine whether the water had penetrated through the sample, and the results were recorded. The above procedure was repeated three times, and cases in which no water penetration was observed in all three repetitions were evaluated as "no leakage".

### Experimental Example 3. Evaluation of Water Vapor Permeability

Water vapor transmission rate (WVTR, g/m²24hr) was measured in accordance with ASTM E 96-63 (temperature: 37.8°C, relative humidity: 90% R.H.)

**TABLE 1**

| Classification | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|
| UV-A (%) | 99.5 | 99.9 | 99.9 | 35.4 | 68.9 | 99.9 | 71.4 |
| UV-B (%) | 99.9 | 99.9 | 99.9 | 57.3 | 99.9 | 99.9 | 99.9 |
| UPF | 50+ | 50+ | 50+ | 0 | 35 | 50+ | 40 |
| WVTR (g/m²24hr) | 0.33 | 0.33 | 0.19 | 0.33 | 0.33 | 0.04 | 1.75 |
| Waterproofness | No leakage | No leakage | No leakage | No leakage | No leakage | No leakage | No leakage |

As shown in Table 1, for Examples 1 to 3, which contained avobenzone in a content of 9 to 30 parts by weight and homosalate in a content of 20 to 30 parts by weight, based on 100 parts by weight of the polyurethane resin, both UV-A and UV-B blocking efficiencies were observed to be in the range of 99.5% to 99.9%. Additionally, when the thickness of the polyurethane air-permeable film layer was controlled within the range of 10 to 50 µm, the WVTR values were measured to be between 0.19 and 0.33 g/m²24hr, indicating an appropriate level suitable for skin-protective air-permeable waterproof tapes. All samples also exhibited no water leakage in the waterproofness evaluation.

In Comparative Example 1, the contents of avobenzone and homosalate were adjusted to 1 part by weight each, resulting in significantly decreased UV-A and UV-B blocking efficiencies of 35.4% to 57.3%. In Comparative Example 2, although the content of homosalate was increased by adjusting the contents of avobenzone and homosalate to 1 part by weight and 20 parts by weight, respectively, the UV-blocking efficiency was observed to range from 38.9% to 99.9% for both UV-A and UV-B. This demonstrates that an insufficient avobenzone content of less than 5 parts by weight leads to poor UV-A blocking performance. Comparative Example 3, in which the thickness of the air-permeable film layer was adjusted to 70 µm, showed a WVTR of 0.04 g/m²24hr. This demonstrates that the film thickness exceeding 50 µm excessively results in a low water vapor permeability, which is unsuitable for skin-protective air-permeable waterproof tapes. In Comparative Example 4, in which the thickness of the air-permeable film layer was adjusted to 1 µm, a high WVTR of 1.75 g/m²24hr was achieved, but the excessively thin film led to a significant decrease in UV-A blocking efficiency to 71.4%.

### Industrial Applicability

The present disclosure exhibits high air permeability and waterproofness, strong adhesion to the skin, and effective UV-blocking performance, thereby making it suitable for application in skincare and cosmetic products.

## Claims

1. An air-permeable waterproof tape, comprising:
a first release film layer;
a PSA adhesive layer formed on an upper surface of the first release film layer;
an polyurethane air-permeable film layer formed on an upper surface of the PSA adhesive layer; and
a second release film layer formed on an upper surface of the polyurethane air-permeable film layer,
wherein the polyurethane air-permeable film layer comprises avobenzone and homosalate, and
the PSA adhesive layer comprises a non-acidic acrylic copolymer, an isocyanate-based curing agent, niacinamide, and adenosine.

2. The air-permeable waterproof tape of claim 1, wherein the first release film layer and the second release film layer each have a thickness of 10 to 200 µm,
the PSA adhesive layer has a thickness of 3 to 50 µm, and
the polyurethane air-permeable film layer has a thickness of 3 to 50 µm.

3. The air-permeable waterproof tape of claim 1, wherein the polyurethane air-permeable film layer comprises 5 to 30 parts by weight of the avobenzone and 5 to 30 parts by weight of the homosalate, based on 100 parts by weight of polyurethane, and
the PSA adhesive layer comprises 0.1 parts by weight of xylene diisocyanate (XDI) as the curing agent, 0.001 to 10 parts by weight of the niacinamide, and 0.001 to 10 parts by weight of the adenosine, based on 100 parts by weight of the non-acidic acrylic copolymer.

4. The air-permeable waterproof tape of claim 1, wherein the first release film layer is composed of polyethylene terephthalate (PET), and
the second release film layer is composed of polyolefin.

5. The air-permeable waterproof tape of claim 1, wherein the polyurethane air-permeable film layer has an UV-blocking efficiency of 99% or higher, shows no water leakage when evaluated according to a waterproofness evaluation method described below, and has a water vapor transmission rate of 0.1 to 1.0,
wherein the waterproofness evaluation method is performed as follows:
conditioning samples for 16 h at a relative humidity of (60±15) % and a temperature of (21±2) °C and conducting testing under the same environmental conditions;
cutting each sample and a standard cellulose-based filter paper to match the dimensions of a test jig;
completely filling the jig with distilled water maintained at (21±2) °C;
mounting the sample onto the jig such that an adhesive surface (skin-contact) thereof faces the distilled water inside the jig while ensuring that no air is trapped between the jig and the sample;
sequentially placing the filter paper and a ring on top of the sample and firmly clamping the assembly to prevent leakage of water from the jig and to restrict movement of the sample during testing;
introducing distilled water initially stored at an inlet of the jig through a tube connected to the jig until the water reaches and makes contact with the sample mounted at the top of the jig and maintaining this state for (300±10) s;
visually inspecting the filter paper to determine whether the water had penetrated through the sample and recording the results; and
repeating the above procedure three times, wherein cases in which no water penetration is observed in all three repetitions are evaluated as "no leakage".

6. The air-permeable waterproof tape of claim 1, wherein the polyurethane air-permeable film layer has microvoids formed therein.
